# EUROPEAN PATENT APPLICATION

(11) **EP 4 509 549 A1**
(43) Date of publication of application: **19.02.2025**
(21) Application number: 23788083.6
(22) Date of filing: 09.03.2023
(51) Int. Cl.: C08G 77/38, C08G 77/14, C09K 23/54

(54) **CARBOXYLATED ORGANOPOLYSILOXANE, METHOD FOR PRODUCING CARBOXYLATED ORGANOPOLYSILOXANE, AND SURFACTANT**

(30) Priority: 14.04.2022 JP 2022066852
(71) Applicant: SHIN-ETSU CHEMICAL CO., LTD., Tokyo 1000005 (JP)
(72) Inventor: WATANABE Takuma, Annaka-shi, Gunma 379-0224 (JP)
(74) Representative: Sonnenhauser, Thomas Martin
(86) International application number: PCT/JP2023/009081
(87) International publication number: WO 2023/199661

(57) **Abstract**

The present invention relates to a carboxy group-containing organopolysiloxane represented by the following general formula (1). In the formula, R is independently a group selected from the group consisting of an alkyl group having 1 to 6 carbon atoms, an aryl group having 6 to 10 carbon atoms, and an aralkyl group having 7 to 10 carbon atoms, "x" is an integer of 0 to 400, "y" is an integer of 1 to 100, "n" is an integer of 1 to 30, X¹ is an alkylene group having 2 to 6 carbon atoms, and X² is an alkylene group having 2 to 6 carbon atoms. This provides a carboxyl group-containing organopolysiloxane having an ether bond and an ester bond as a linker, and a method for manufacturing the carboxyl group-containing organopolysiloxane that is free from peculiar odor derived from the carboxylic acid.

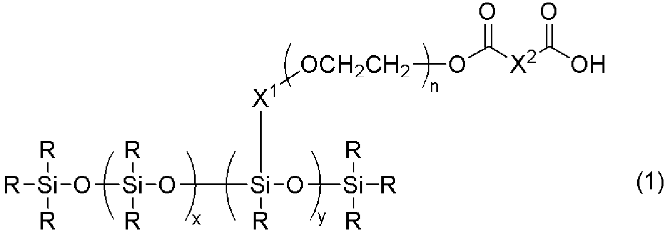

## Description

### TECHNICAL FIELD

The present invention relates to a carboxy group-containing organopolysiloxane, a method for manufacturing the carboxy group-containing organopolysiloxane, and a surfactant.

### BACKGROUND ART

Emulsification technology in manufacturing cosmetics is becoming more sophisticated and diversified. Among these, a polysiloxane into which a hydrophilic organic group is introduced is often used in cosmetics because it can be oriented to a water/oil interface and can provide a stable emulsion. For the hydrophilic organic group, an ether bond and a hydroxy group have been studied, but in recent years, introduction of a carboxy group has been reported.

So far, methods for linking a carboxyl group to silicone (Patent Documents 1 and 2) and compounds obtained by these methods have been disclosed. These methods involve a two-step reaction as shown below. First, a catalytic addition reaction is performed between a carboxylic acid protected by a silyl group having a double bond at the end and methylhydrogenpolysiloxane. Next, the desired carboxyl group-containing organopolysiloxane is obtained by deprotecting the silyl group. However, with this synthesis method, the remained carboxylic acid of a raw material may cause a problem with a peculiar odor that is inappropriate for cosmetics.

Furthermore, the known method has the disadvantage of having a long-chain alkylene group with low hydrophilicity as a linker. In order to exhibit higher surface activity, it is desirable to introduce a hydrophilic linker such as an ether bond or an ester bond.

### CITATION LIST

### PATENT LITERATURE

Patent Document 1: JP 2008-266285 A
Patent Document 2: JP 2020-29453 A

### SUMMARY OF INVENTION

### TECHNICAL PROBLEM

The present invention has been made in view of the above-described problem. An object of the present invention is to provide a carboxyl group-containing organopolysiloxane having an ether bond and an ester bond as a linker. Another object of the present invention is to provide a method for manufacturing the carboxyl group-containing organopolysiloxane that is free from peculiar odor derived from the carboxylic acid.

### SOLUTION TO PROBLEM

To solve the above problems, the present invention provides a carboxy group-containing organopolysiloxane represented by the following general formula (1), 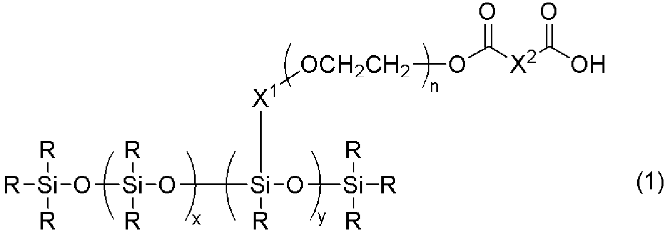 wherein R is independently a group selected from the group consisting of an alkyl group having 1 to 6 carbon atoms, an aryl group having 6 to 10 carbon atoms, and an aralkyl group having 7 to 10 carbon atoms, "x" is an integer of 0 to 400, "y" is an integer of 1 to 100, "n" is an integer of 1 to 30, X¹ is an alkylene group having 2 to 6 carbon atoms, and X² is an alkylene group having 2 to 6 carbon atoms.

The inventive carboxy group-containing organopolysiloxane is highly hydrophilic and exhibits higher surface activity.

Further, the present invention provides a method for manufacturing the carboxy group-containing organopolysiloxane above, comprising a step of reacting (A) a hydroxy group-containing organopolysiloxane represented by the following general formula (2) and (B) a cyclic acid anhydride represented by the following general formula (3) under the presence of an amine compound, 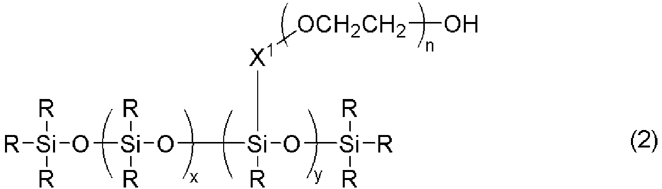 wherein R is independently a group selected from the group consisting of an alkyl group having 1 to 6 carbon atoms, an aryl group having 6 to 10 carbon atoms, and an aralkyl group having 7 to 10 carbon atoms, "x" is an integer of 0 to 400, "y" is an integer of 1 to 100, "n" is an integer of 1 to 30, and X¹ is an alkylene group having 2 to 6 carbon atoms, 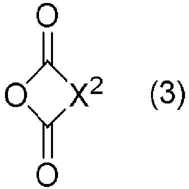 wherein X² is an alkylene group having 2 to 6 carbon atoms.

With such a manufacturing method, the carboxyl group-containing organopolysiloxane for the purpose can be obtained as compounds that is free from the peculiar odor originated from the carboxylic acid.

Further, the present invention provides a surfactant comprising the aforementioned carboxy group-containing organopolysiloxane.

This surfactant is highly hydrophilic and exhibit high surface activity.

### ADVANTAGEOUS EFFECTS OF INVENTION

The present invention enable manufacturing the carboxy group-containing organopolysiloxane having an ether bond and an ester bond as a linker. Furthermore, since a cyclic acid anhydride as raw material can be easily removed by washing with water, the carboxy group-containing organopolysiloxane does not have a peculiar odor. Further, by having an ether bond and an ester bond as a linker, its hydrophilicity is improved, and it is possible to obtain an organopolysiloxane having excellent surface activity. Therefore, the organopolysiloxane of the present invention can be preferably used in cosmetics etc.

### DESCRIPTION OF EMBODIMENTS

The carboxyl group-containing organopolysiloxane that has a carboxyl group linked to silicone and exhibits good surface activity, and a method to obtain the above-mentioned carboxyl group-containing organopolysiloxane as a compound that is free from the peculiar odor being unsuitable for cosmetics and caused by the residual carboxylic acid of raw material have been desired.

As a result of a diligent study to achieve the above objectives, the inventor has found that a carboxyl group-containing organopolysiloxane having high surface activity can be manufactured by a reaction between a hydroxyl group-containing organopolysiloxane and a cyclic acid anhydride in the presence of an amine compound, and the inventor has completed the present invention.

That is, the present invention is the carboxy group-containing organopolysiloxane represented by the following general formula (1).

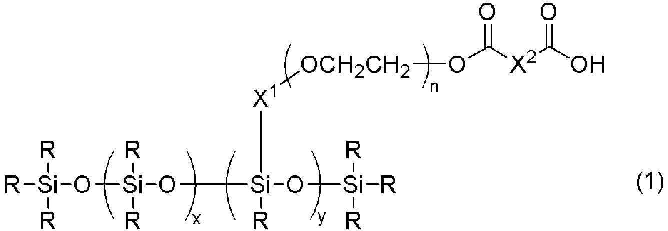

In the formula, R is independently a group selected from the group consisting of an alkyl group having 1 to 6 carbon atoms, an aryl group having 6 to 10 carbon atoms, and an aralkyl group having 7 to 10 carbon atoms, "x" is an integer of 0 to 400, "y" is an integer of 1 to 100, "n" is an integer of 1 to 30, X¹ is an alkylene group having 2 to 6 carbon atoms, and X² is an alkylene group having 2 to 6 carbon atoms.

Hereinafter, the present invention will be described in detail.

### [Organopolysiloxane]

The present organopolysiloxane is a compound that has a linker including an oxyalkylene group and an ester bond and is represented by the following general formula (1) .

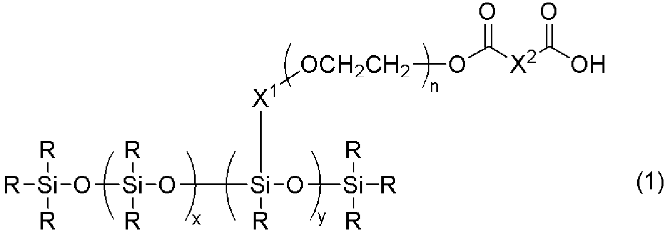

In the formula, R is independently a group selected from the group consisting of an alkyl group having 1 to 6 carbon atoms, an aryl group having 6 to 10 carbon atoms, and an aralkyl group having 7 to 10 carbon atoms, "x" is an integer of 0 to 400, "y" is an integer of 1 to 100, "n" is an integer of 1 to 30, X¹ is an alkylene group having 2 to 6 carbon atoms, and X² is an alkylene group having 2 to 6 carbon atoms.

In the above general formula (1), R is selected from the group consisting of an alkyl group having 1 to 6 carbon atoms, an aryl group having 6 to 10 carbon atoms, and an aralkyl group having 7 to 10 carbon atoms. Examples of the alkyl groups having 1 to 6 carbon atoms include alkyl groups such as a methyl group, an ethyl group, a propyl group, and a butyl group; cycloalkyl groups such as a cyclopentyl group and a cyclohexyl group; etc. Examples of the aryl group having 6 to 10 carbon atoms include a methylphenyl group and an ethylphenyl group. Examples of the aralkyl group having 7 to 10 carbon atoms include a phenylmethyl group and a phenylethyl group. X¹ is selected from alkylene groups having 2 to 6 carbon atoms. Examples of the alkylene group having 2 to 6 carbon atoms include an ethylene group and a propylene group. X² is selected from alkylene groups having 2 to 6 carbon atoms. Examples of the alkylene group having 2 to 6 carbon atoms include an ethylene group, a propylene group, and a butylene group.

In the above general formula (1), "x" is a number from 0 to 400, preferably from 5 to 100, "y" is a number from 1 to 100, preferably from 1 to 20, and "n" is a number from 1 to 30, preferably from 1 to 10. The number of carbon atoms of X¹ is 2 to 6, preferably 2 to 4. Note that, the bonding of the siloxane units enclosed by parentheses subscripted by "x" and "y" may be in blocks or at random in order.

In addition, the carboxyl group-containing organopolysiloxane is preferably a reaction product between an organopolysiloxane represented by the following general formula (2) and a cyclic acid anhydride represented by the following general formula (3) which are described in a manufacturing method mentioned later (hereinafter simply referred to as a reaction product).

### [Method for Manufacturing Organopolysiloxane]

The method for manufacturing the inventive organopolysiloxane (hereinafter sometimes abbreviated as "the inventive manufacturing method") includes a step of reacting (A) a hydroxy group-containing organopolysiloxane represented by the following general formula (2) and (B) a cyclic acid anhydride represented by the following general formula (3) under the presence of an amine compound.

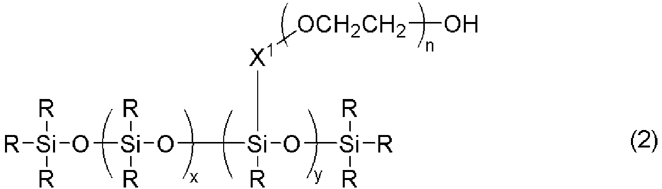

In the formula, R is independently a group selected from the group consisting of an alkyl group having 1 to 6 carbon atoms, an aryl group having 6 to 10 carbon atoms, and an aralkyl group having 7 to 10 carbon atoms, "x" is an integer of 0 to 400, "y" is an integer of 1 to 100, "n" is an integer of 1 to 30, and X¹ is an alkylene group having 2 to 6 carbon atoms.

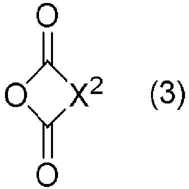

In the formula, X² is an alkylene group having 2 to 6 carbon atoms.

In the above general formula (2), R is selected from the group consisting of an alkyl group having 1 to 6 carbon atoms, an aryl group having 6 to 10 carbon atoms, and an aralkyl group having 7 to 10 carbon atoms. Examples of the alkyl group having 1 to 6 carbon atoms include alkyl groups such as a methyl group, an ethyl group, a propyl group, and a butyl group; cycloalkyl groups such as a cyclopentyl group and a cyclohexyl group; etc. Examples of the aryl group having 6 to 10 carbon atoms include a methylphenyl group and an ethylphenyl group. Examples of the aralkyl group having 7 to 10 carbon atoms include a phenylmethyl group and a phenylethyl group. X¹ is selected from alkylene groups having 2 to 6 carbon atoms. Examples of the alkylene group having 2 to 6 carbon atoms include an ethylene group and a propylene group.

In the above general formula (3), X² is selected from alkylene groups having 2 to 6 carbon atoms. Examples of the alkylene groups having 2 to 6 carbon atoms include an ethylene group, a propylene group, a butylene group, etc.

In the above general formula (2), "x" is a number from 0 to 400, preferably from 5 to 100, "y" is a number from 1 to 100, preferably from 1 to 20, and "n" is a number from 1 to 30, preferably from 1 to 10. The number of carbon atoms of X¹ is 2 to 6, preferably 2 to 4. Note that, the bonding of the siloxane units enclosed by parentheses subscripted by "x" and "y" may be in block or at random in order.

In the inventive manufacturing method, the mole ratio of the amount of the cyclic acid anhydride represented by the general formula (3) relative to the amount of the hydroxy group in the general formula (2) is preferably 1 to 10, more preferably 1 to 3.

The amines used in the inventive manufacturing method include linear aliphatic tertiary amines such as triethylamine, diisopropylethylamine, and tri-n-propylamine; cycloaliphatic tertiary amines such as 1,8-diazabicyclo[5.4.0]undec-7-ene and 1,4-diazabicyclo[2.2.2]octane; and heterocyclic amines such as pyridine. Among these amines, linear aliphatic tertiary amines are preferable and triethylamine is most preferable.

In the inventive manufacturing method, the amount (mass) of the amine used is not particularly limited. The amount of amino groups in the amine is preferably 0.1 to 5 equivalents relative to the amount of hydroxy groups.

In the inventive manufacturing method, the reaction temperature in the reaction step between (A) a hydroxy group-containing organopolysiloxane represented by the general formula (2) and (B) a cyclic acid anhydride represented by the general formula (3) under the presence of an amine compound is preferably 50°C or higher and 90°C or lower, more preferably 60°C or higher and 80°C or lower, and most preferably 65°C or higher and 75°C or lower.

In the inventive manufacturing method, reaction conditions such as reaction time and solvent to be used are not particularly limited. The reaction time is preferably 1 to 48 hours, more preferably 1 to 24 hours, and most preferably 2 to 12 hours. The solvent is preferably an ether solvent such as tetrahydrofuran or cyclopentyl methyl ether.

Further, the present invention also provides a surfactant containing the above-mentioned carboxyl group-containing organopolysiloxane.

This surfactant exhibits high surface activity due to its high hydrophilicity and can satisfactorily reduce interfacial tension. The interfacial tension can be measured by a Wilhelmy method.

### EXAMPLE

Hereinafter, the present invention will be specifically described by showing Synthesis Examples and Examples. It is possible to be changed as appropriate according to the purpose. Accordingly, the scope of the present invention should not be interpreted to be limited to the specific examples shown below.

### [Synthesis Example 1]

30.00 g of hydroxyl group-containing organopolysiloxane represented by the following formula (a), 2.14 g of succinic anhydride (so that the mole ratio of the number of moles of succinic anhydride relative to the total number of moles of hydroxyl groups in the hydroxyl group-containing organopolysiloxane is 1.2), 0.90 g of triethylamine, and 36 g of tetrahydrofuran were charged into a separable flask equipped with a thermometer, a stirring device, and a reflux condenser, and the mixture was heated and stirred at 70°C for 3.5 hours. After the reaction was completed, a low boiling point fraction was removed at 60°C for 1 hour under reduced pressure of 0.4 kPa. Subsequently, the residue was added with 22 g of acetone and 22 g of 1N hydrochloric acid, stirred at room temperature for 1 hour, and then allowed to stand to separate silicone layer. The obtained silicone layer was added with 22 g of acetone and 22 g of water and subjected to an operation of liquid separation and washing three times. The low boiling point fraction was removed at 100°C for 1 hour under a reduced pressure of 0.4 kPa to obtain 13.6 g of a carboxyl group-containing organopolysiloxane (polysiloxane b) represented by the following formula (b). When ¹H-NMR of the obtained compound was measured, no unreacted hydroxy group was detected. Moreover, no peculiar odor was observed.

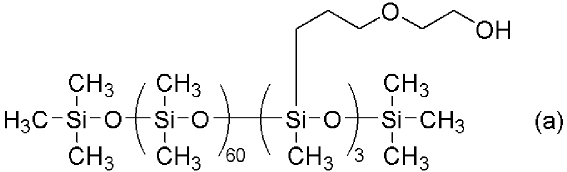

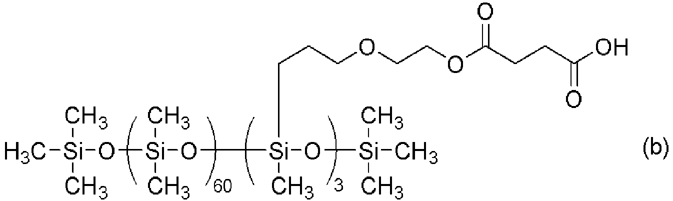

The ¹H-NMR spectrum is shown below. ¹H-NMR(400MHz,CDCl₃): δ -0.40-0.24(m, 387H), 0.41-0.54(m, 6H), 1.53-1.67(m, 6H), 2.65(br, 12H), 3.40(t, J=7.0Hz, 6H), 3.60(t, J=4.8Hz, 6H), 4.22(t, 4.4Hz, 6H).

### [Synthesis Example 2]

Synthesis was carried out in the same manner as in Synthesis Example 1 except that 30.00 g of hydroxyl group-containing organopolysiloxane represented by the following formula (c), 3.73 g of succinic anhydride (so that the ratio of the number of moles of succinic anhydride relative to the total number of moles of hydroxy groups in the hydroxy group-containing organopolysiloxane is 1.3), 1.56 g of triethylamine, and 36 g of tetrahydrofuran were used. 18.0 g of a carboxy group-containing organopolysiloxane (polysiloxane d) represented by the following formula (d) was obtained. 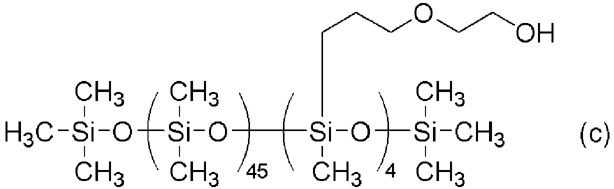 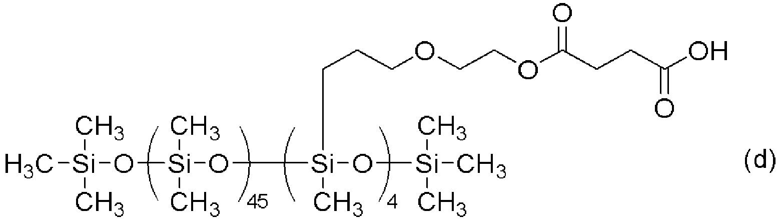 ¹H-NMR(400MHz, CDCl₃): δ -0.30-0.23(m, 300H), 0.41-0.52(m, 8H), 1.53-1.67(m, 8H), 2.64(br, 16H), 3.40(t, J=6.8Hz, 8H), 3.60(t, J=4.2Hz, 8H), 4.22(t, 4.3Hz, 8H).

### [Surface Tension Test]

### [Example 1]

A surface tension test was performed on the carboxy group-containing organopolysiloxane obtained in Synthesis Example 1. The carboxy group-containing organopolysiloxane was dissolved in dimethyl silicone oil (product name: KF-96A-6cs, manufactured by Shin-Etsu Chemical Co., Ltd.) having a kinematic viscosity of 6 mm²/s so that the solution is prepared to have the concentration of 0.01 wt% of the carboxy group-containing polysiloxane. A two-layered liquid of this dimethyl silicone solution and ion-exchanged water was prepared. Surface tension at 0 and 5 hours after the two-layered liquid was prepared was measured using a high-precision surface tensiometer DY-700 (manufactured by Kyowa Interface Science Co., Ltd.) according to the Wilhelmy method, and surface-active performance was evaluated.

### [Examples 2 to 4]

Two-layered liquid of the dimethyl silicone solutions and ion-exchanged water of Examples 2 to 4 were prepared in the same manner as in Example 1, except that the carboxy group-containing organopolysiloxane and the concentration were changed as shown in Table 1, and surface-active performance was evaluated. The results are shown in Table 1.

### [Comparative Example 1]

Surface-active performance was evaluated in the same manner as in Example 1, except that two-layered liquid of dimethyl silicone oil (product name: KF-96A-6cs, manufactured by Shin-Etsu Chemical Co., Ltd.) having a kinematic viscosity of 6 mm²/s and ion-exchanged water was prepared. The results are shown in Table 1.

**[Table 1]**

| | Example 1 | Example 2 | Example 3 | Example 4 | Comparative Example 1 |
|---|---|---|---|---|---|
| Polysiloxane | b | b | d | d | - |
| Concentration (wt%) | 0.01 | 0.0005 | 0.01 | 0.005 | - |
| Surface tension (mN/m) (After a lapse of 0 hours) | 15.27 | 23.78 | 6.13 | 8.42 | 40.26 |
| Surface tension (mN/m) (After a lapse of 5 hours) | 13.34 | 16.28 | 6.25 | 5.10 | - |

The inventive carboxy group-containing organopolysiloxane exhibited higher surface-active performance when compared to the blank experiment of Comparative Example 1.

### INDUSTRIAL APPLICABILITY

The inventive polysiloxane exhibited high surface-active performance. Furthermore, since it does not cause a peculiar odor, it is useful as a cosmetic composition for skincare, hair, antiperspirants, deodorants, makeup, and protection from ultraviolet rays.

It should be noted that the present invention is not limited to the above-described embodiments. The above embodiments are just examples, and any examples that substantially have the same feature and demonstrate the same functions and effects as those in the technical concept disclosed in claims of the present invention are included in the technical scope of the present invention.

## Claims

1. A carboxy group-containing organopolysiloxane represented by the following general formula (1), 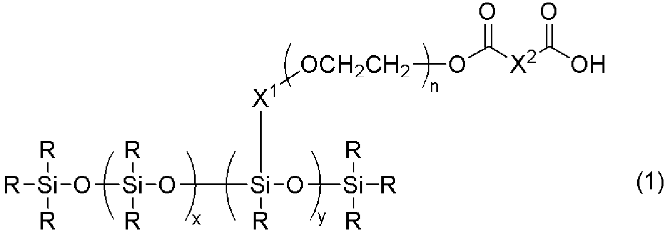 wherein R is independently a group selected from the group consisting of an alkyl group having 1 to 6 carbon atoms, an aryl group having 6 to 10 carbon atoms, and an aralkyl group having 7 to 10 carbon atoms, "x" is an integer of 0 to 400, "y" is an integer of 1 to 100, "n" is an integer of 1 to 30, X¹ is an alkylene group having 2 to 6 carbon atoms, and X² is an alkylene group having 2 to 6 carbon atoms.

2. A method for manufacturing the carboxy group-containing organopolysiloxane according to claim 1, comprising a step of reacting (A) a hydroxy group-containing organopolysiloxane represented by the following general formula (2) and (B) a cyclic acid anhydride represented by the following general formula (3) under the presence of an amine compound, 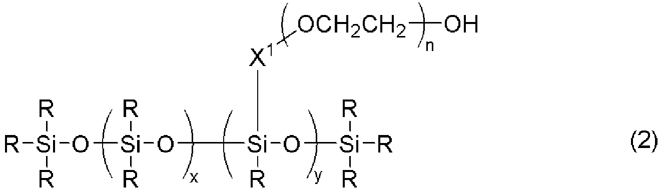 wherein R is independently a group selected from the group consisting of an alkyl group having 1 to 6 carbon atoms, an aryl group having 6 to 10 carbon atoms, and an aralkyl group having 7 to 10 carbon atoms, "x" is an integer of 0 to 400, "y" is an integer of 1 to 100, "n" is an integer of 1 to 30, and X¹ is an alkylene group having 2 to 6 carbon atoms, 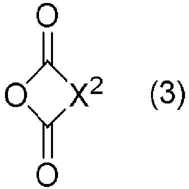 wherein X² is an alkylene group having 2 to 6 carbon atoms.

3. A surfactant comprising the carboxy group-containing organopolysiloxane according to claim 1.
